# EUROPÄISCHE PATENTSCHRIFT

(11) **EP 1 229 986 B1**
(45) Veröffentlichungstag und Bekanntmachung des Hinweises auf die Patenterteilung: **07.07.2004**
(21) Anmeldenummer: 00992432.5
(22) Anmeldetag: 20.10.2000
(51) Int. Cl.: B01D 29/23, B01D 35/31

(54) **FILTERELEMENT MIT STEIGROHR**
FILTER ELEMENT PROVIDED WITH AN ASCENDING PIPE
ELEMENT DE FILTRE A TUBE ASCENDANT

(30) Priorität: 22.10.1999 DE 19950913
(43) Veröffentlichungstag der Anmeldung: 14.08.2002
(73) Patentinhaber: Hydac Filtertechnik GmbH, 66280 Sulzbach/Saar (DE)
(72) Erfinder: SAKRASCHINSKY, Michael, 66386 St. Ingbert (DE); HENNES, Stefan, 66540 Hangard (DE)
(74) Vertreter: Bartels, Martin Erich Arthur
(86) Internationale Anmeldenummer: PCT/EP2000/010334
(87) Internationale Veröffentlichungsnummer: WO 2001/028654

(56) Entgegenhaltungen:
- EP-A- 0 090 383
- DE-A- 3 341 642
- US-A- 4 218 324
- US-A- 5 250 179
- US-A- 5 868 932
- US-A- 5 984 109

## Beschreibung

Die Erfindung betrifft ein Filterelement mit Steigrohr mit den Merkmalen des Oberbegriffes des Patentanspruches 1.

Bei den bekannten Lösungen, wie sie auf dem Markt frei erhältlich sind, bildet das Steigrohr zusammen mit dem Filtermaterial nebst Stützrohr eine einteilige Baugruppe mit der Folge, daß bei verschmutztem Filtermaterial das gesamte Filterelement auch mit den werthaltigen Komponenten des Steigrohres vollständig zu erneuern ist. Da die werthaltigen Teile des Steigrohres andere Materialkombinationen aufweisen als das zu entsorgende eigentliche Filtermaterial, bestehen darüber hinaus Probleme, was das Recyceln oder Entsorgen der bekannten Lösungen anbelangt. Da Filterelemente grundsätzlich bei verschmutztem Filtermaterial in kürzeren zeitlichen Abständen zu erneuern sind, ist die Abfallmenge relativ groß und geht mit einem großen Gewicht einher, was bei der Abfallbeseitigung zu handhaben ist. Des weiteren wird bei den bekannten Lösungen das Filtermaterial häufig mit dem Steigrohr verschweißt oder verklebt, was fertigungstechnisch aufwendig und kostenintensiv ist.

Durch den Stand der Technik (DE-A-4 409 970) ist es ferner bekannt, Stützkörper für-Filterelemente vorzusehen, die ein Stützrohr aufweisen, das in Anlage mit dem Filtermaterial in Form einer Filtermatte bringbar ist, wobei das Stützrohr zum Durchströmen eines gefilterten Mediums mit einer Vielzahl von gleichförmig verteilten umfangsseitig angeordneten Durchlässen versehen ist. Ferner kann es dabei vorgesehen sein, das Stützrohr innenumfangsseitig über eine Ring- und Stegkonstruktion zusätzlich auszusteifen, wobei dann das Innere des Stützrohres in einzelne fluidführende Kammern aufgeteilt ist. Dank des Stützrohres läßt sich die Filtrationsleistung des jeweiligen Filterelementes verbessern, da das Filterelement höheren Drücken bei der Durchströmung ausgesetzt werden kann, wobei das Stützrohr das Filtermaterial entgegen der jeweiligen Durchflußrichtung abstützt und derart beispielsweise ein Ein- und Ausbeulen des Filtermaterials verhindert. Die dahingehend bekannten Lösungen weisen regelmäßig kein Steigrohr auf, das als eigenständiges rohrförmiges Bauteil neben dem Stützrohr in dem Filterelement nach der beanspruchten Gattung vorhanden ist. Dahingehende Steigrohre verfügen entgegen den Stützrohren nicht über gleichmäßig verteilte Durchlässe in hoher Anzahl vergleichbar einer Perforation, sondem haben nur ausgewählte Durchtrittsstellen, beispielsweise im Fußbereich des Steigrohres, oder im Längsmittenbereich des jeweils zum Einsatz kommenden Steigrohres. Ansonsten weist das Steigrohr eine geschlossene, vorzugsweise zylindrische Mantelfläche auf, was den Vorteil hat, daß sich das zu filtrierende Fluid zunächst im Steigrohr ansammeln kann, bevor es für einen Filtrationsvorgang das Steigrohr verläßt, um anschließend das Filtermaterial mit dem Stützrohr zu durchströmen. Es hat sich gezeigt, daß durch den Einsatz dahingehender Steigrohre sich schädliche Druckschläge im hydraulischen System vermeiden lassen und daß insbesondere bei der sich anschließenden Filtration es zu einer gleichmäßigen Verteilung und mithin Belastung an Druckeinleitungen auf das Filtermaterial mit Stützrohr kommt.

Durch GB 933852 ist ein Filterelement bekannt, das ein Steigrohr aufweist.

Durch die US-A-5,868,932 ist des weiteren ein Filterelement bekannt mit einem Filtergehäuse, in dem ein Filtermaterial angeordnet ist, das ein zylindrisches Stützrohr mit einer Vielzahl an gleichmäßig verteilten Durchlässen in hoher Anzahl umfaßt. Zur besseren Trennung von Filtermaterial mit Stützrohr sind diese als getrennte Teile ausgebildet und das Stützrohr stützt sich innenumfangsseitig über einen Aufnahmeteil an einer stegartigen Verlängerung ab, die über eine schraubenartige Verbindung im Gehäusedeckel lösbar angeordnet ist zusammen mit dem Filtertopf des Filtergehäuses, in dem das Filtermaterial mit dem Stützrohr sich zwischen dem einen Ende des Filtertopfes abstützt und dem Gehäusedeckel an der gegenüberliegenden Seite. Das genannte Filtermaterial mit Stützrohr wird von außen nach innen durchströmt, wobei für eine Abfuhr des filtrierten Fluids im Gehäusedeckel eine zylindrische Ausnehmung vorhanden ist, die von der schraubenartigen Verbindung durchgriffen ist, die auch dem Lösen der stegartigen Verlängerung dient, an der sich das Stützrohr abstützt. Mit dieser bekannten Lösung ist es möglich, das Stützrohr wieder zu verwenden und nur das Filtermaterial entsprechend zugesetzt von Verschmutzungen bedingt durch den Filtrationsbetrieb zu tauschen, um so dessen Veraschung zu erleichtern. Den vorteilhaften Einsatz von Steigrohren zeigt das dahingehende Dokument nicht.

Ausgehend von diesem Stand der Technik liegt der Erfindung die Aufgabe zugrunde, die bekannten Filterelemente, bestehend aus Filtermaterial mit Stützrohr sowie einem Steigrohr, dahingehend weiter zu verbessern, dass zum einen eine Entsorgung oder ein Recycelvorgang vereinfacht ist und dass sie kostengünstig herstellbar sind, indem sie fertigungstechnisch einfacher hergestellt werden können. Eine dahingehende Aufgabe löst ein Filterelement mit den Merkmalen des Patentanspruches 1 in seiner Gesamtheit.

Dadurch, daß gemäß dem kennzeichnenden Teil des Anspruches 1 das Steigrohr an mindestens einem seiner Enden mit einer Aufnahme für das Filtermaterial derart versehen ist, daß eine trennbare Verbindung zwischen dem Filtermaterial mit Stützrohr als eine Baugruppe und dem Steigrohr als andere Baugruppe gegeben ist, die es erlaubt, unter Beibehalten des Steigrohres das verschmutzte Filtermaterial gegen ein neues Filtermaterial zu tauschen, kann die aufwendige Steigrohrkonstruktion wiederverwendet werden und es entsteht eine Gewichtsverringerung des zu entsorgenden Sondermülls nach dem Wechsel des eigentlich verschmutzten Filtermaterials mit Stützrohr. Durch den Aufbau des Filterelementes in lösbare Baugruppen ist darüber hinaus der fertigungstechnische Montageaufwand reduziert und mithin eine Kosteneinsparung möglich.

Weitere vorteilhafte Ausführungsformen des genannten Filterelementes sind Gegenstand der Unteransprüche.

Im folgenden wird das erfindungsgemäße Filterelement anhand einer Ausführungsform nach der Zeichnung näher erläutert..

Es zeigen in prinzipieller und nicht maßstäblicher Darstellung die
- Fig.1: teilweise im Schnitt, teilweise in Ansicht das Steigrohr als eine Baugruppe;
- Fig.2: teilweise im Schnitt, teilweise in Ansicht das Filtermaterial als weitere Baugruppe;
- Fig.3: teilweise im Schnitt, teilweise in Ansicht die zusammengesetzten Baugruppen aus dem Steigrohr nach der Fig.1 und dem Filtermaterial nach der Fig.2.

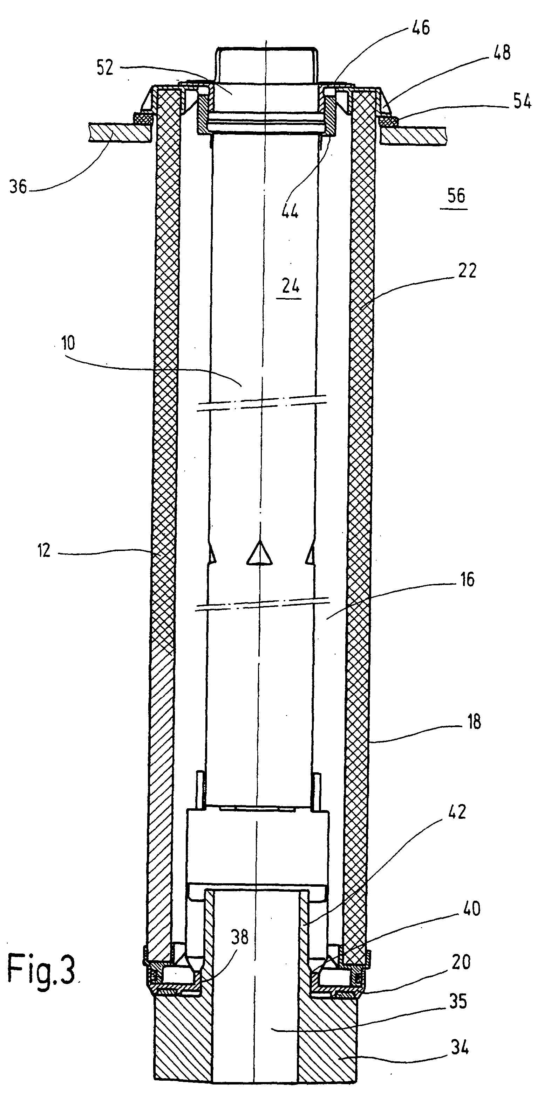

Das in den Figuren gezeigte Filterelement weist ein Steigrohr 10 auf und ein das Steigrohr 10 umgebendes, der Verschmutzung unterliegendes Filtermaterial 12. Das Steigrohr 10 bildet im wesentlichen einen Hohlzylinder aus, in dem das zu filtrierende Fluid geführt ist, welches über Durchlässe 14 das Steigrohr 10 verläßt und in das Innere 16 des Filterelementes (vgl. Fig.3) eintritt. Von dort durchströmt es von innen nach außen das Filterelement und durchdringt dabei das Filtermaterial 12 mit der Folge, daß im Fluid befindliche Verschmutzungen durch das Filtermaterial 12 abfiltriert werden und im Filtermaterial 12 verbleiben. Zur Erhöhung der Druckstabilität des Filtermaterials 12 ist außenumfangsseitig ein Stützrohr 18 in üblicher Bauart vorhanden. Das Filtermaterial 12 ist in der Art eines Hohlzylinders ausgebildet, wobei dieses in der Art einer Filtermatte aufgefaltet den Hohlzylinder ausbildet (nicht dargestellt). Der dahingehende Aufbau eines Filtermaterials 12 ist auf dem Gebiet der Filterelemente üblich und wird daher nicht noch näher beschrieben.

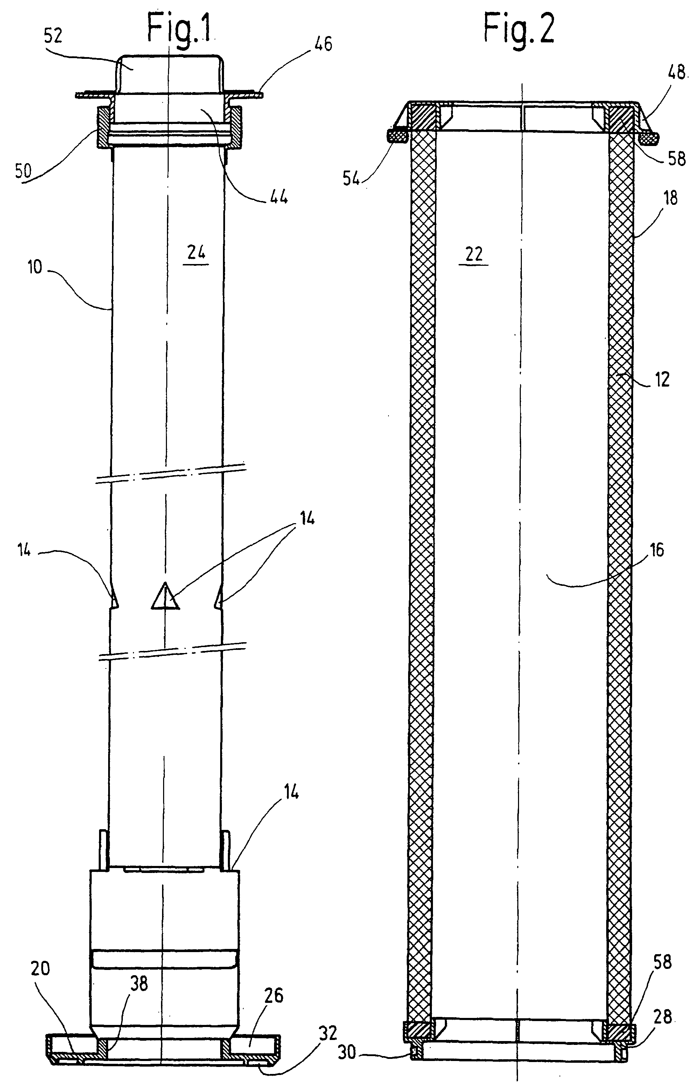

In Blickrichtung auf die Figuren gesehen weist das Steigrohr 10 an seinem unteren Ende eine Aufnahme 20 für das Filtermaterial 12 auf. Vorzugsweise ist die Aufnahme 20 über ein Schweißverfahren mit dem sonstigen metallischen Steigrohr 10 fest verbunden. Wie sich insbesondere aus den Fig.1 bis 3 ergibt, ist eine trennbare Verbindung zwischen dem Filtermaterial 12 als eine Baugruppe 22 und dem Steigrohr 10 als andere Baugruppe 24 gegeben, wobei das Steigrohr 10 für die weitere Verwendung als werthaltiges Teil beibehalten werden kann, wohingegen das verschmutzte Filtermaterial 12 gegen ein neues Filtermaterial 12 getauscht wird, indem man das Filtermaterial 12 vom Steigrohr 10 trennt.

Die in Blickrichtung auf die Figuren unten dargestellte eine Aufnahme 20 weist eine ringartige Vertiefungsnut 26 auf, in die das Filtermaterial 12 mit einem Abschlußteil 28 stirnseitig und bündig eingreift. Das angesprochene Abschlußteil 28 ist außenumfangsseitig mit einem Dichtteil 30 versehen für eine außenseitige Abdichtung zwischen dem Filtermaterial 12 und der Aufnahme 20, wobei die Aufnahme 20 stirnseitig ein ringförmiges Dichtmittel 32 aufweist für die Abdichtung gegenüber den für die Festlegung des Filterelementes vorgesehenen Gehäuseteilen 34 (vgl. Fig.3). Die Gehäuseteile 34 bilden zusammen mit weiteren Gehäuseteilen 36 die teilweise dargestellte Begrenzung eines Tanks od.dgl., in den das Filterelement, wie in der Fig.3 gezeigt, einsetzbar ist.

Die angesprochene eine Aufnahme 20 ist innenumfangsseitig mit einem Gewindestück 38 versehen, das für eine Schraubverbindung 40 mit den Gehäuseteilen 34 vorgesehen ist. Hierzu weisen die Gehäuseteile 34 auf ihrer dem Filterelement zugewandten Seite eine zylindrische Hohlverlängerung 42 auf mit einer absatzartigen Verbreiterung, die das Gegengewinde für die vorzunehmende Schraubverbindung 40 ausbildet. Über die obere Öffnung 52 des Filterelementes erfolgt die Zuströmung des Fluids in das Filterelement und in der unteren Öffnung 35 des Gehäuseteils kann ein nicht näher dargestelltes, federbelastetes Rückschlagventil vorgesehen sein, das eine Bypassfunktion im bekannten Sinne auslöst, sobald das Filtermaterial 12 keinen Durchlaß mehr des zu filtrierenden Fluids erlaubt im Hinblick auf die bereits fortgeschrittene Verschmutzung.

Das Steigrohr 10 ist mit einer weiteren Aufnahme 44 an seinem anderen freien Ende versehen, wobei diese weitere Aufnahme 44 eine flanschartige Verbreiterung 46 aufweist, die für die stirnseitige Anlage mit einer Endkappe 48 des Filtermaterials 12 vorgesehen ist. Die weitere Aufnahme 44 des Steigrohres 10 ist mit einem Gewindeabschnitt 50 versehen mit einem Innengewinde, in das ein haubenartiges Festlegeteil 52 zum Verbinden des Filtermaterials 12 mit dem Steigrohr 10 über sein Außengewinde einschraubbar ist. Aufgrund dieses Einschraubvorganges ist der axiale Abstand zwischen der flanschartigen Verbreiterung 46 und der Aufnahme 20 veränderbar, insbesondere der dahingehende Abstand verringerbar, sofern das Filterelement 12 zwischen den genannten Einspannstellen am Steigrohr 10 festzulegen ist.

Die Endkappe 48 des Filtermaterials 12 ist zu ihrem freien Ende hin stegartig verbreitert und weist in Richtung des Filterelementes 12 ein ringförmiges Abdichtteil 54 auf, das in der Einbausituation (Fig.3) auf der Oberseite der oberen weiteren Gehäuseteile 36 anliegt und zum Abdichten des von den Gehäuseteilen 34,36 begrenzten Inneren 56, vorzugsweise in Form des Tankinneren, gegenüber der Umgebung dient. Das Filtermateriaf 12 ist mit der Endkappe 48 sowie mit dem Abschlußteil 28 über eine Klebstoffverbindung 58 fest verbunden, die in der Fig.2 dargestellt, in der Fig.3 der besseren Übersichtlichkeit wegen aber weggelassen wurde. Das Filtermaterial 12 besteht vorzugsweise aus veraschbaren oder recycelbaren Materialien, um den Entsorgungsvorgang zu erleichtern.

Für eine Montage des Filterelementes 12 wird zunächst das Festlegeteil 52 vom Gewindeabschnitt 50 des Steigrohres 10 entfernt und das Filtermaterial 12 kann gewechselt werden, indem das verschmutzte Filtermaterial 12 durch Abziehen aus der Aufnahme 20 des Steigrohres 10 abgezogen wird. Das neue Filtermaterial 12 wird dann über das Festlegeteil 52 mit seiner flanschartigen Verbreiterung 46 an dem Steigrohr 10 gesichert und der derart hergestellte Verbund in die Öffnung des Gehäuseteils 36 eingeschoben. Die Abdichtung des Filterelementes zum Gehäuseteil 36 erfolgt über das Abdichtteil 54, das durch eine Feder (nicht dargestellt) vorgespannt wird.

Mit der erfindungsgemäßen Filterelemente-Lösung ist die Wiederverwendung des konstruktiv aufwendigen Steigrohres 10 gewährleistet, wobei eine deutliche Gewichtsverringerung des zu entsorgenden Sondermülls nach dem Wechsel des Filtermaterials 12 erreicht ist, da nur noch dieses zu entsorgen und aufzubereiten ist. Durch die aufgezeigte Baugruppenlösung ist darüber hinaus fertigungstechnisch in günstiger Weise eine einfache Herstellbarkeit des Filterelementes erreicht. Es hat sich als besonders vorteilhaft erwiesen, die erfindungsgemäße Filterelementelösung für Hydropumpen zu verwenden und diesen in Fluidrichtung vorzuschalten. Insbesondere kann innerhalb des Steigrohres 10 ein nicht näher dargestelltes Vorspannventil vorhanden sein, das es erlaubt, innerhalb des Steigrohres einen erhöhten Druck vorzugeben, beispielsweise in der Größenordnung von 0,5 bis 1 bar. Im Hinblick auf diesen erzielten Vorspanndruck, der im übrigen auch höher eingestellt werden kann, und durch die partielle Bevorratung der zu filtrierenden Fluidmenge im Steigrohr, ist zum einen der Ansaugvorgang für die Hydropumpe (nicht dargestellt) erleichtert bzw. ein gleichmäßiger volumetrischer Füllungsgrad im Hinblick auf die bevorratete Fluidmenge erreichbar.

## Patentansprüche

1. Filterelement mit Steigrohr (10) und ein das Steigrohr (10) umgebendes, der Verschmutzung unterliegendes Filtermaterial (12), das sich an einem von dem Steigrohr (10) verschiedenen Stützrohr (18) abstützt, das das Filtermaterial (12) außenumfangsseitig umgibt und das über gleichmäßig verteilte Durchlässe in hoher Anzahl verfügt, wobei das Steigrohr (10) bis auf ausgewählte Durchtrittsstellen im Fuß- oder im Längsmittenbereich eine geschlossene Mantelfläche aufweist und wobei für eine Durchströmung des Filterelementes von innen nach außen mit dem zu filtrierenden Fluid das Steigrohr (10) über eine Öffnung (52) verfügt, **dadurch gekennzeichnet, daß** das Steigrohr (10) an mindestens einem seiner Enden mit einer Aufnahme (20) für das Filtermaterial (12) derart versehen ist, daß eine trennbare Verbindung zwischen dem Filtermaterial (12) mit Stützrohr (18) als eine Baugruppe (22) und dem Steigrohr (10) als andere Baugruppe (24) gegeben ist, die es erlaubt, unter Beibehalten des Steigrohres (10) das verschmutzte Filtermaterial (12) gegen ein neues Filtermaterial (12) zu tauschen.

2. Filterelement nach Anspruch 1, **dadurch gekennzeichnet daß** die eine Aufnahme (20) eine ringartige Vertiefungsnut (26) aufweist, in die das Filtermaterial (12) mit einem Abschlußteil (28) stirnseitig eingreift.

3. Filterelement nach Anspruch 2, **dadurch gekennzeichnet, daß** das Abschlußteil (28) außenumfangsseitig mit einem Dichtteil (30) versehen ist für eine außenseitige Abdichtung zwischen dem Filtermaterial (12) und der Aufnahme (20), und daß die Aufnahme (20) stirnseitig ein Dichtmittel (32) aufweist für die Abdichtung gegenüber für die Festlegung des Filterelementes vorgesehenen Gehäuseteilen (34). tel (32) aufweist für die Abdichtung gegenüber für die Festlegung des Filterelementes vorgesehenen Gehäuseteilen (34).

4. Filterelement nach Anspruch 3, **dadurch gekennzeichnet, daß** die eine Aufnahme (20) innenumfangsseitig mit einem Gewindestück (38) versehen ist, das für eine Schraubverbindung (40) mit den Gehäuseteilen (34) vorgesehen ist.

5. Filterelement nach einem der Ansprüche 1 bis 4, **dadurch gekennzeichnet, daß** das Steigrohr (10) mit einer weiteren Aufnahme (44) an seinem anderen freien Ende versehen ist und daß die weitere Aufnahme (44) mit einer flanschartigen Verbreiterung (46) versehen ist für die stirnseitige Anlage mit einer Endkappe (48) des Filtermaterials (12).

6. Filterelement nach Anspruch 5, **dadurch gekennzeichnet, daß** die weitere Aufnahme (44) des Steigrohres (10) mit einem Gewindeabschnitt (50) versehen ist, in das ein Festlegeteil (52) zum Verbinden des Filtermaterials (12) mit dem Steigrohr (10) einschraubbar ist.

7. Filterelement nach Anspruch 5 oder 6, **dadurch gekennzeichnet, daß** die Endkappe (48) des Filtermaterials (12) an ihrem freien Ende mit einem Abdichtteil (54) versehen ist zum Abdichten eines von den Gehäuseteilen (34,36) begrenzten Inneren (56) gegenüber der Umgebung.

8. Filterelement nach Anspruch 7, **dadurch gekennzeichnet, daß** das Filtermaterial (12) mit der Endkappe (48) und mit dem Abschlußteil (28) über eine Klebstoffverbindung (58) fest verbunden ist.

9. Filterelement nach einem der Ansprüche 1 bis 8, **dadurch gekennzeichnet, daß** zumindest das Filtermaterial (12) aus veraschbaren oder recycelbaren Materialien besteht.

## Claims

1. Filter element with an ascending pipe (10) and a filter material (12) surrounding the said ascending pipe (10) and exposed to soiling, whereby the same is supported by a support pipe (18) that is separate from the ascending pipe (10), and that surrounds the filter material (12) externally and circumferentially, and that incorporates a large number of evenly spaced passages, whereby the ascending pipe (10) incorporates a closed jacket surface apart from where the chosen passages are located within the foot or central longitudinal area, and whereby the ascending pipe (10) incorporates an opening (52) for the flow of fluid to be filtered through the filter element from the inside to the outside, **characterised in that** the ascending pipe (10) is equipped with a take-up (20) for the filter material (12) at least at one end of the same in such a way that a disconnectable connection is created between the filter material (12) together with the support pipe (18) as one component group (22), and the ascending pipe (10) as the other component group (24), so that it will be possible to replace the soiled filter material (12) with new filter material (12) whilst maintaining the position of the ascending pipe (10).

2. Filter element according to Claim 1, **characterised in that** one take-up (20) incorporates an annular recess (26) for the engagement of the filter material (12) with one of the end sides of the end section.

3. Filter element according to Claim 2, **characterised in that** the end section (28) is equipped with a sealing part (30) around the outer circumference of the same, for an external sealing engagement between the filter material (12) and the take-up (20), and **in that** the end side of the take-up (20) incorporates a sealing means (32) for the sealing engagement of the housing components (34) intended for the fixing of the filter element

4. Filter element according to Claim 3, **characterised in that** one take-up (20) is equipped with a threaded connection (38) along its inner circumference, for the connection of the screw connector (40) with the housing components (34).

5. Filter element according to one of the preceding Claims 1 to 4, **characterised in that** the ascending pipe (10) is equipped with a further take-up (44) it its other free end, and **in that** the further take-up (44) is in turn equipped with a flange-like widening (46), for the abutment of the end side against an end cap (48) of the filter material (12).

6. Filter element according to Claim 5, **characterised in that** the further take-up (44) of the ascending pipe (10) is equipped with a threaded section (50), into which a fixing part (52) can be threadingly inserted for the connection of the filter material (12) with the ascending pipe (10).

7. Filter element according to Claim 5 or 6, **characterised in that** the end cap (48) of the filter material (12) is equipped with a sealing part (54) at its free end, for the sealing off of a interior space (56) enclosed by the housing components (34, 36) from its surroundings.

8. Filter element according to Claim 7, **characterised in that** the filter material (12) is firmly connected with the end cap (48) and with the end section (28) via an adhesive connection (58).

9. Filter element according to one of the preceding Claims 1 to 8, **characterised in that** at least the filter material (12) consists of a crematable or recyclable material.

## Revendications

1. Elément filtrant comprenant un tuyau ascendant (10) et un matériau filtrant (12) entourant le tuyau ascendant (10) et étant situé sous les pollutions, lequel matériau s'appuie sur un tuyau de support (18) différent du tuyau ascendant (10), lequel tuyau de support entoure le matériau filtrant (12) côté périphérie extérieure et dispose d'un nombre élevé de passages répartis régulièrement, le tuyau ascendant (10) comprenant jusqu'aux points de passage sélectionnés dans la zone inférieure ou médiane longitudinale une surface d'enveloppe fermée et, pour une traversée de l'élément filtrant de l'intérieur vers l'extérieur avec le fluide à filtrer, le tuyau ascendant (10) disposant d'un orifice (52), **caractérisé en ce que** le tuyau ascendant (10) est doté sur au moins une de ses extrémités d'un logement (20) pour le matériau filtrant (12), **caractérisé en ce qu'**une connexion séparable est déterminée entre le matériau filtrant (12) comprenant le tuyau de support (18) comme sous-groupe (22) et le tuyau ascendant (10) comme autre sous-groupe (24), laquelle permet, en conservant le tuyau ascendant (10), de remplacer le matériau filtrant (12) encrassé par un nouveau matériau filtrant (12).

2. Elément filtrant selon la revendication 1, **caractérisé en ce que** l'un des logements (20) comprend une rainure de renfoncement (26) annulaire, dans laquelle s'engage le matériau filtrant (12) côté frontal avec une pièce de fermeture (28).

3. Elément filtrant selon la revendication 2, **caractérisé en ce que** la pièce de fermeture (28) est dotée côté périphérie extérieure d'une pièce d'étanchéité (30) pour réaliser une étanchéité côté extérieur entre le matériau filtrant (12) et le logement (20), et **en ce que** le logement (20) comprend côté frontal un moyen d'étanchéité (32) pour réaliser une étanchéité par rapport aux pièces de boîtier (34) prévues pour la fixation de l'élément filtrant.

4. Elément filtrant selon la revendication 3, **caractérisé en ce que** l'un des logements (20) est doté côté périphérie extérieure d'une douille filetée (38) qui est prévue pour l'assemblage par vis (40) avec les pièces de boîtier (34).

5. Elément filtrant selon l'une des revendications 1 à 4, **caractérisé en ce que** le tuyau ascendant (10) est doté d'un autre logement (44) sur son autre extrémité libre et **en ce que** l'autre logement (44) est doté d'un élargissement (46) en forme de bride pour une installation côté frontal avec un capuchon d'extrémité (48) du matériau filtrant (12).

6. Elément filtrant selon la revendication 5, **caractérisé en ce que** l'autre logement (44) du tuyau ascendant (10) est doté d'une section filetée (50), dans laquelle peut être vissée une pièce de fixation (52) pour connecter le matériau filtrant (12) au tuyau ascendant (10).

7. Elément filtrant selon la revendication 5 ou 6, **caractérisé en ce que** le capuchon d'extrémité (48) du matériau filtrant (12) est doté sur son extrémité libre d'une pièce d'étanchéité (54) pour réaliser l'étanchéité d'un espace intérieur (56) délimité par les pièces de boîtier (34, 36) par rapport aux composants environnants.

8. Elément filtrant selon la revendication 7, **caractérisé en ce que** le matériau filtrant (12) est relié au capuchon d'extrémité (48) et à la pièce de fermeture (28) par un assemblage collé (58).

9. Elément filtrant selon l'une des revendications 1 à 8, **caractérisé en ce qu'**au moins l'élément filtrant (12) est constitué de matériaux pouvant être incinérés ou recyclés.
